# EUROPEAN PATENT APPLICATION

(11) **EP 4 290 729 A1**
(43) Date of publication of application: **13.12.2023**
(21) Application number: 22748803.8
(22) Date of filing: 07.01.2022
(51) Int. Cl.: H02J 7/00

(54) **BATTERY CHARGING CONTROL METHOD AND SYSTEM, VEHICLE, READABLE STORAGE MEDIUM, AND DEVICE**

(30) Priority: 07.02.2021 CN 202110169031
(71) Applicant: CRRC Qingdao Sifang Co., Ltd., Qingdao, Shandong 266111 (CN)
(72) Inventor: LIU, Ming, Qingdao, Shandong 266111 (CN); LIANG, Jianying, Qingdao, Shandong 266111 (CN); LI, Yankun, Qingdao, Shandong 266111 (CN); XIAO, Chanjuan, Qingdao, Shandong 266111 (CN); TIAN, Qing, Qingdao, Shandong 266111 (CN); ZHOU, Zhuomin, Qingdao, Shandong 266111 (CN)
(74) Representative: Prinz & Partner mbB
(86) International application number: PCT/CN2022/070778
(87) International publication number: WO 2022/166524

(57) **Abstract**

The present disclosure provides a battery charging control method and system, a vehicle, a readable storage medium, and a device. According to the present disclosure, the method comprises: in the charging process, determining an adaptive allowable charging current value according to an acquired current state of a battery; calculating the difference between a bus voltage and a battery voltage according to the difference between the allowable charging current value and a current value obtained by real-time sampling; and controlling the bus voltage according to the difference between the bus voltage and the battery voltage, so as to realize timely-adjusted charging control. The purpose of controlling the charging current is achieved by continuously adjusting a charging voltage; it is guaranteed that the charging current of each cluster of batteries does not exceed the charging current limit; on one hand, the control precision of the charging process is improved, and on the other hand, the charging safety is also improved.

## Description

### FIELD

The present disclosure relates to the field of battery charging, and more particularly, to a method and system for controlling battery charging, a vehicle, a readable storage medium and a device.

### BACKGROUND

The statements in this section merely provide background information related to the present disclosure, which does not necessarily constitute the conventional technologies.

At present, when the battery parallel charging system performs current control, it generally controls the total bus current. According to parallel connection rules, the current flowing through each battery is unknown. Hence, there are certain problems. Especially for multi-cluster battery parallel charging systems, the problem is more significant.

On the one hand, some battery clusters may be fully charged first. Due to the parallel connection of multiple clusters, once a battery cluster is fully charged, battery charging is stopped to prevent overcharging. This can result in other batteries remaining undercharged for a long period of time, leading to low charging efficiency. To make it worse, the internal resistance of the battery increases as its service life decreases. If such case lasts for a long period of time, it can result in a diminishing actual power charged in the battery, i.e., reducing the available power of the battery and impacting the battery performance.

On the other hand, it is possible that the charging current dispatched to some battery clusters is over the current charging current limit of the battery clusters. If the battery is charged with such over-limit current for a long time, it will cause damage to the battery and seriously affect the battery life and safety performance, which in turn impacts the operating state of the object being charged. Although it can be guaranteed that no battery will be overcharged to avoid safety accidents during the charging process by controlling each battery cluster with a rather small value, some battery clusters are still not fully charged.

### SUMMARY

In order to solve the above problems, a method and system for controlling battery charging, a vehicle, a readable storage medium and a device are provided according to the present disclosure. In the present disclosure, it ensures that the charging current of each battery cluster will not exceed the charging current limit value during the charging process by constantly adjusting the charging voltage to achieve the purpose of controlling the charging current. On the one hand, the control accuracy of the charging process is improved, and on the other hand, the charging safety is also improved.

Technical solutions according to some embodiments of the present disclosure are provided as follows.

In a first aspect, a method for controlling battery charging is provided according to the present disclosure, which is used for a single-cluster battery parallel system. The method includes:
determining a current value allowable for charging matched with a state of a battery currently acquired;
calculating, based on a difference between the current value allowable for charging and a current value obtained by real-time sampling, a difference between a bus voltage and a battery voltage; and
controlling the bus voltage based on the difference between the bus voltage and the battery voltage, to realize charging control.

In the above technical solution, for a single-cluster battery, the difference ΔU between the bus voltage and the battery voltage can be updated and adjusted in real time based on the state of the battery currently acquired. When the battery cell voltage reaches a threshold value for reducing current, the value of ΔU will become negative for a short time, thereby lowering the bus voltage and functioning as current reducing control. There is no significant fluctuation in current. In addition, voltage and current followability is excellent. By adjusting in real time, it can ensure the charging consistence between batteries to the greatest extent to reduce the difference in battery charging amount.

As an optional implementation, the state of the battery currently acquired includes: a state of charge, a temperature, a voltage and an internal resistance value of the battery.

As an optional implementation, the difference between the bus voltage and the battery voltage is calculated based on the difference between the current value allowable for charging and the current value obtained by real-time sampling, by using a PI control loop.

As an optional implementation, controlling the bus voltage based on the difference between the bus voltage and the battery voltage includes:
calculating a sum of a difference between a current bus voltage and the battery voltage and a voltage at an initial moment of battery charging, as a final current charging voltage value; and controlling the bus voltage to reach the final current charging voltage value to control a charging current.

In a second aspect, a method for controlling battery charging is provided according to the present disclosure, which is used for a multi-cluster battery parallel system. The method includes:
calculating a current value allowable for charging for each battery cluster matched with a state of the battery cluster currently acquired, and determining a minimum value among the current values allowable for charging;
calculating, based on a difference between the minimum value among the current values allowable for charging and a current value obtained by real-time sampling, a difference between a bus voltage and a battery voltage; and
controlling the bus voltage based on the difference between the bus voltage and the battery voltage, to realize charging control.

In the above technical solution, in a multi-cluster battery system, the control integrates information about all batteries to calculate the minimum charging current limit value in the multi-cluster batteries, and the charging voltage is calculated with the minimum charging current limit value, and then the bus voltage is accordingly controlled. It can ensure the safety of all battery clusters. In addition, the control can be adjusted according to actual state to control the bus voltage. It responds fast to changes in the battery state and improves the control accuracy of the charging process.

As an optional implementation, the battery clusters are connected in parallel.

As an optional implementation, the state of the battery currently acquired includes: a state of charge, a temperature, a voltage and an internal resistance value of each battery.

As an optional implementation, the difference between the bus voltage and the battery voltage is calculated calculating, based on the difference between the current value allowable for charging and the current value obtained by real-time sampling, by using a PI control loop.

As an optional implementation, calculating a sum of a difference between a current bus voltage and the battery voltage and a voltage at an initial moment of battery charging, as a final current charging voltage value; and controlling the bus voltage to reach the final current charging voltage value to control a charging current.

In a third aspect, a system for controlling battery charging is provided, the system includes:
a parameter configuration module, configured to determine a current value allowable for charging matched with a state of a battery currently acquired;
a calculation module, configured to calculate a difference between a bus voltage and a battery voltage based on a difference between the current value allowable for charging and a current value obtained by real-time sampling; and
a charging control module, configured to control the bus voltage based on the difference between the bus voltage and the battery voltage, to realize charging control.

In a fourth aspect, a system for controlling battery charging is provided, the system includes:
a parameter configuration module, configured to calculate a current value allowable for charging for each battery cluster matched with a state of the battery cluster currently acquired, and determine a minimum value among the current values allowable for charging;
a calculation module, configured to calculate a difference between a bus voltage and a battery voltage based on a difference between the minimum value among the current values allowable for charging and a current value obtained by real-time sampling; and
a charging control module, configured to control the bus voltage based on the difference between the bus voltage and the battery voltage, to realize charging control.

In a fifth aspect, a control system is provided, the control system includes:
a battery management system, configured to determine a current value allowable for charging matched with a state of a battery currently acquired; calculate a difference between a bus voltage and a battery voltage based on a difference between the current value allowable for charging and a current value obtained by real-time sampling; and determine a final requested charging voltage value based on the difference between the bus voltage and the battery voltage; and
a vehicle controller, configured to receive the final requested charging voltage value from the battery management system, and control the bus voltage with the final requested charging voltage value.

In a sixth aspect, a control system is provided, the control system includes:
a battery management system, configured to calculate a current value allowable for charging for each battery cluster matched with a state of the battery cluster currently acquired, and determine a minimum value among the current values allowable for charging; calculate a difference between a bus voltage and a battery voltage based on a difference between the minimum value among the current values allowable for charging and a current value obtained by real-time sampling; and determine a final requested charging voltage value based on the difference between the bus voltage and the battery voltage; and
a vehicle controller, configured to receive the final requested charging voltage value from the battery management system, and control the bus voltage with the final requested charging voltage value.

In a seventh aspect, a computer readable storage medium is provided, the computer readable storage medium storing a plurality of instructions thereon, where the instructions are applicable for being loaded by a processor of a terminal device to implement the above method for controlling battery charging.

In an eighth aspect, a terminal device is provided, the terminal device includes: a processor; and a computer readable storage medium; where the processor is configured to implement instructions; the computer readable storage medium is configured to store a plurality of instructions, and the instructions are applicable for being loaded by the processor to implement the above method for controlling battery charging.

In a ninth aspect, a vehicle is provided, the vehicle includes: the above control systems, the above readable storage medium or the above terminal device.

Compared to the conventional technology, the present disclosure has effects as follows.

In the present disclosure, the value of the difference ΔU between the bus voltage and the battery voltage is adjusted in real time by monitoring the current state of the battery. When the battery cell voltage of the battery system reaches a threshold value for reducing current, the value of ΔU will become negative for a short time, thereby lowering the bus voltage and functioning as current reducing control. The simulation results show that the control method of the present disclosure can ensure that the SOC of the battery is increased steadily without significantly fluctuating current. In addition, voltage and current followability is excellent.

In a case that the present disclosure is applied to a multi-cluster parallel battery system, the information about all batteries is integrated to calculate the minimum charging current limit value in the multi-cluster battery, and the charging voltage is calculated with the minimum charging current limit value, and then the bus voltage is controlled. The safety performance of each battery is guaranteed to the greatest extent.

In the present disclosure, it achieves the purpose of controlling the charging current by constantly adjusting the charging voltage. It responds fast to changes in the battery state. When there is a detection error in the battery management system, it can also eliminate the impact of the detection error through PI adjustment to further improve the control accuracy of the charging process, thereby improving charging safety.

In the present disclosure, since the charging current is controlled accurately during the charging process, the actual charging capacity of the entire battery system at the end of charging is approximate to be in a fully charged state, which ensures that the states of all the batteries are approximately the same. In this way, it is beneficial to protect the batteries without increasing charging time. Hence, the charging efficiency can be improved efficiently.

In order to make the above objects, features and advantages of the present disclosure more comprehensible, preferred embodiments will be described in detail below along with the accompanying drawings.

### BRIEF DESCRIPTION OF THE DRAWINGS

The drawings, which constitute a part of this specification of the present disclosure, are used to provide further understanding of the present disclosure. And, the exemplary embodiments along with their descriptions are used to explain the present disclosure, which do not constitute improper limitations to the present disclosure.
Figure 1 is a schematic diagram of a control principle according to a first embodiment of the present disclosure;
Figure 2 is a schematic diagram of a charging process according to the first embodiment of the present disclosure;
Figure 3 is a schematic diagram of a charging effect according to the first embodiment of the present disclosure; and
Figure 4 is a schematic diagram of a control principle according to a second embodiment of the present disclosure.

### DETAILED DESCRIPTION OF EMBODIMENTS

The present disclosure will be further described below in conjunction with the accompanying drawings and embodiments herein below.

It should be noted that the following detailed description is exemplary and intended to provide further explanation of the present disclosure. Unless defined otherwise, all technical and scientific terms used herein have the same meaning as commonly understood by one of ordinary skill in the art to which this disclosure belongs.

It should be noted that the terminology used herein is only for describing embodiments, which is not intended to limit the embodiments of the present disclosure. As used herein, unless the context clearly dictates otherwise, the singular is intended to include the plural. It should also be understood that when the terms "including" and/or "comprising" are used in this specification, they indicate that there are features, steps, operations, devices, components and/or combinations thereof.

In the present disclosure, the orientation or positional relationships indicated by terms such as "upper", "lower", "left", "right", "front", "rear", "vertical", "horizontal", "side", "bottom" and the like are based on the orientation or positional relationships shown in the drawings, which are only relational terms determined for the convenience of describing the structural relationship between the components or elements of the present disclosure, rather than specifically referring to any component or element in the present disclosure. Hence, they cannot be understood as limitations of the present disclosure.

In the present disclosure, terms such as "securely connected", "coupled" and "connected" should be interpreted in a broad sense, which indicate that they may be securely connected, integrally connected or detachably connected; or they may be connected directly or indirectly through an intermediate connection. For relevant researchers or technicians in the field, the specific meanings of the above terms in the present disclosure may be determined according to specific situations, which should not be construed as limitations to the present disclosure.

In order to make the improvement of the technical solution provided by the present disclosure clear to those skilled in the art, a multi-cluster battery parallel charging strategy is used as an example to illustrate in detail.

In the conventional technology, a first type of multi-cluster battery parallel charging strategy is a constant voltage charging method, which is implemented by controlling the bus voltage at a constant value to charge the battery. During the constant voltage charging, the charging current will decrease as the battery voltage approaches the bus voltage, until the battery voltage is equal to the bus voltage. This method is difficult to achieve the desired effect in the actual projects. Due to the inherent factors such as the difference in internal resistance of the two battery clusters and the difference in line impedance, current unevenness occurs between currents of multiple clusters. As a result, some batteries are fully charged first. Since the relationship of multi-cluster of batteries connected in parallel, once a battery cluster is fully charged, battery charging is stopped to prevent overcharging. This will cause other batteries to remain undercharged for a long period of time, resulting in low charging efficiency. In addition, the internal resistance of the battery increases as its service life decreases. Using the constant voltage charging strategy over a long period of time, it can result in a diminishing actual power charged in the battery. As a result, the available power of the battery is decreasing.

In addition to the small charging capacity, constant voltage charging is more likely to cause overcharging and overcurrent problems. Due to the small internal resistance of the battery, if the battery voltage is low and the bus voltage is set too high, it will cause a particularly large charging moment. The current shock may be as high as hundreds or even thousands of amperes. The high current shock can damage the electrical devices and battery life. Most significantly, it causes excessive polarization of the battery, which leads to a faster increase in the battery voltage. For usage safety of the battery, it will be protected in advance, which may cause safety accidents in long-term using.

Hence, a second type of control strategy, i.e., a multi-step constant current charging, has been widely used at present.

The multi-step constant current charging refers to charging the battery by controlling the bus current to be stepped down. When charging a lithium battery, it is determined whether the battery is fully charged by the voltage of the battery. Nevertheless, the lithium battery shows different polarization characteristics when the current is different. Generally, the greater the current, the greater the polarization. In other words, the shorter the time it takes to reach the upper limit of the charging voltage, the less power can be charged in general. Therefore, with the characteristic that the battery polarization changes with current, the multi-step constant current charging strategy can be used, that is, the constant current charging is performed with a larger current value at the beginning of charging. When the battery voltage is close to fully charged, the current is reduced by half. In this case, due to the current reduction, the polarization of the battery fades, resulting in dropping in the voltage, while the battery can continue to be charged until the current drops below a set value to charge to the upper limit of the voltage, i.e., the charging is complete. The advantage of this charging method is that it has high charging efficiency and can charge more power without increasing the charging time. Moreover, since charging is controlled based on the charging voltage, it is safer than the above constant voltage charging strategy.

In the conventional technology, a constant current charging strategy is used in multi-cluster battery systems. The constant current charging strategy has many advantages when applied to a single battery cluster system. However, when it is used in a multi-cluster battery system, it suffers the same problems as the constant voltage charging.

When performing constant current charging in a multi-cluster battery system, the battery management system sends to the vehicle controller the charging current value of the battery based on the real-time parameters such as voltage and temperature of the battery. The vehicle controller adjusts the bus current value based on the requested value of the battery management system to achieve the purpose of controlling charging. However, in a multi-cluster battery parallel system, the states of all batteries are not completely consistent. In addition to the inconsistencies in the charging speed, internal resistance, and life decay speed of different batteries mentioned above, there are also inconsistencies in battery temperature caused by heat dissipation due to factors such as structural design, etc. As a result, different battery management systems may request different charging current values. Since the vehicle controller can only control the bus current, it can only select the minimum value among the multiple requested charging current values to control the bus current. In this way, it ensures that no battery will be overcharged during the charging process to eliminate safety accidents. Nevertheless, such control method also has the same problem as constant voltage charging, i.e., only one battery cluster is fully charged, while the others are still in a state of insufficient charging.

In addition, due to the impact of the detection accuracy of the battery management system, the actual control effect may even worse, and there is also a risk of overcharging. In addition, it is difficult to ensure that the batteries are all fully charged. In order to meet the usage requirements, more power distribution is usually required, which increases the costs significantly.

In summary, for batteries of multiple clusters connected in parallel, since the total voltage is the same, a better approach to control the charging current is to control the bus voltage, i.e., controlling the charging current by increasing and decreasing the bus voltage.

For each battery cluster, the current value allowable for charging may be different based on the current state of the battery. Hence, the voltages calculated based on the allowable current value are also different. Using the lowest voltage among the calculated voltage values of several clusters as the charging voltage can meet the requirement that the charging current of each battery cluster does not exceed the limit current value.

In the conventional charging strategy, the constant voltage charging value or the constant current charging value is unchanged after setting, and the charging control value does not change until the control condition of the next stage is met. As a result, the charging control becomes inflexible. It is difficult to respond to the battery state in a timely manner. Especially when encountering battery problems or some sudden device damage, it is impossible to respond to the charging control in time.

In order to solve the shortcomings of the existing charging strategy, a charging method is provided according to the present disclosure, which can improve the charging efficiency while ensuring the safety of the charging process. The difference needed to be sustained between the bus voltage and the battery voltage is calculated based on the current value allowable for charging. And the current control can be realized by raising the battery voltage. The method of controlling the current by controlling the voltage is more flexible than the charging method in the conventional technology, which has a faster response speed and sustains the charging current below the charging current limit value without extending the whole charging process, so that improves the charging efficiency.

Hereinafter, different embodiments are provided in detail to illustrate the present disclosure.

### First Embodiment

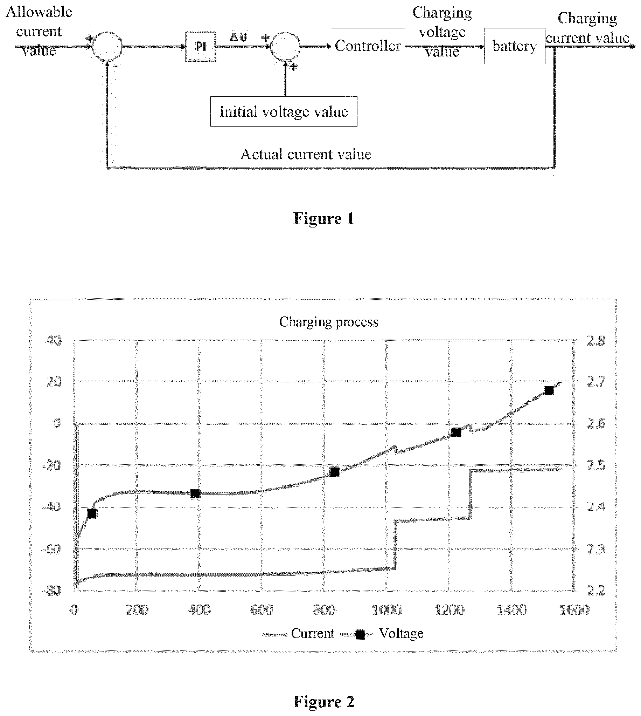

For a single-cluster parallel battery system, the control principle is shown in Figure 1. In this embodiment, a PI control loop is used for voltage control and current limiting control.

Firstly, based on the current state of the battery, such as SOC, temperature, voltage, internal resistance, etc., the current value allowable for charging of the battery system in the current state is calculated. Apparently, in other embodiments, other state parameters may also be used or referred to, such as humidity, used time and the like.

As an example, the charging control logic may be set as follows: constant current 3C is charged to the highest cell voltage to 2.55V; reduced current 2C is charged to the highest cell voltage to 2.6V, and reduced current 1C is charged to the highest cell voltage to 2.7V etc., as shown in Figure 2.

The difference between the current value allowable for charging and the current value obtained by real-time sampling is calculated, and the difference is used as the input of the PI control loop to be inputted into a calculation model.

Then, ΔU value is obtained through PI control loop calculation based on the principle of the relationship between voltage and current. This value, i.e., ΔU value is the difference between the bus voltage and the battery voltage required for controlling the charging current at the current value allowable for charging obtained in the first step.

Finally, the voltage value at an initial moment of battery charging is added to the ΔU value obtained in the previous step and the sum is as the final requested charging voltage value. As a result, a real-time adjustment control of the charging current is realized by controlling the bus voltage to reach this voltage value.

In the above solution, the value of ΔU is adjusted in real time by monitoring the current state of the battery. When the cell voltage of the system reaches the threshold value for reducing current, the value of ΔU will become negative for a short time, thereby lowering the bus voltage and functioning as current reducing control.

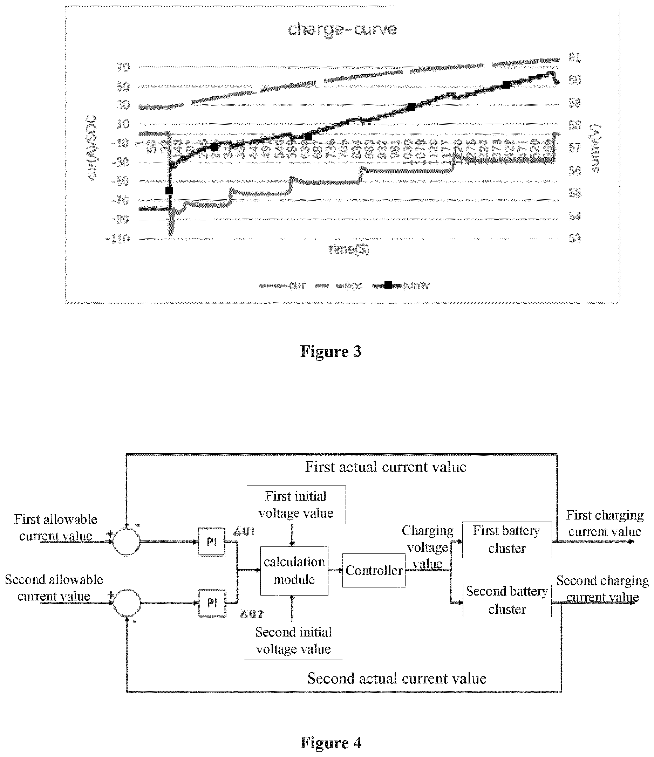

Using the above charging method for a charging test, the curve of the charging process is shown in Figure 3. The charging curve shows that the SOC of the battery has been increasing steadily without significantly fluctuating current. In addition, voltage and current followability is excellent.

### Second Embodiment

For a multi-cluster parallel battery system, the calculation of the charging voltage needs to consider the battery information about multiple clusters. In order to make it easy for those skilled in the art to understand the technical solution, in this embodiment, a two-cluster battery parallel system is used as an example for illustration, which does not mean that this technical solution can only be applied to two-cluster parallel battery system. Rather, the technical solution can be used in all systems with more than two clusters of parallel batteries.

In the multi-cluster parallel battery system, it is required to consider the information about all batteries. The minimum charging current limit value in the multiple clusters of batteries is calculated and then the charging voltage is calculated with the minimum charging current limit value. Subsequently, the bus voltage is adjusted and controlled in real time.

Specifically, the method includes: based on the current state of the battery, including but is not limited to, SOC, temperature, voltage, internal resistance, etc., the current values allowable for charging of the battery system in the current state are calculated. The minimum value among the current values allowable for charging is determined as the minimum charging current limit value.

The difference between the minimum charging current limit and the current value obtained by real-time sampling is calculated, and the difference is used as the input of the PI control loop and inputted into a calculation model.

Then, a ΔU value is obtained through PI control loop calculation based on the principle of the relationship between voltage and current. This value, i.e., ΔU value is the difference between the bus voltage and the battery voltage required for controlling the charging current at the obtained minimum charging current limit value.

Finally, the voltage value at an initial moment of battery charging is added to the ΔU value obtained in the previous step as the final requested charging voltage value. As a result, a control of the charging current is realized by controlling the bus voltage to reach this voltage value.

Apparently, as shown in Figure 4, each charging current limit value may be sent to the PI control loop for calculation to obtain different ΔU values. And then, through the calculation module, the ΔU value corresponding to the minimum charging current limit value is determined, and the determined charging voltage value is the final charging voltage value.

This charging method achieves the purpose of controlling the charging current by constantly adjusting the charging voltage. It responds fast to changes in the battery state. When there is a detection error in the battery management system, it can also eliminate the impact of the detection error through PI adjustment to further improve the control accuracy of the charging process, thereby improving charging safety due to the improvement of the control accuracy. Since the charging current is controlled accurately during the charging process, the actual charging capacity of the entire battery system at the end of charging is more than that of the conventional method without increasing charging time. Hence, the charging efficiency is improved.

### Third Embodiment

A system for controlling battery charging for a single-cluster battery parallel system is provided, which is used to implement the control method provided in the first embodiment.

In this embodiment, the system for controlling battery charging includes:
a parameter configuration module, configured to determine a current value allowable for charging matched with a state of a battery currently acquired;
a calculation module, configured to calculate a difference between a bus voltage and a battery voltage based on a difference between the current value allowable for charging and a current value obtained by real-time sampling; and
a charging control module, configured to control the bus voltage based on the difference between the bus voltage and the battery voltage, to realize charging control.

### Fourth Embodiment

A system for controlling battery charging for a multi-cluster battery parallel system is provided, which is used to implement the control method provided in second embodiment.

In this embodiment, the system for controlling battery charging includes:
a parameter configuration module, configured to calculate a current value allowable for charging for each battery cluster matched with a state of the battery cluster currently acquired, and determine a minimum value among the current values allowable for charging;
a calculation module, configured to calculate a difference between a bus voltage and a battery voltage based on a difference between the minimum value among the current values allowable for charging and a current value obtained by real-time sampling; and
a charging control module, configured to control the bus voltage based on the difference between the bus voltage and the battery voltage, to realize charging control.

### Fifth Embodiment

In a case that the single-cluster battery parallel system is applied to a vehicle, the control method provided in the first embodiment is implemented by cooperation of a battery management system and a vehicle controller.

In this embodiment, a control system includes:
a battery management system, configured to determine a current value allowable for charging matched with a state of a battery currently acquired; calculate a difference between a bus voltage and a battery voltage based on a difference between the current value allowable for charging and a current value obtained by real-time sampling; and determine a final requested charging voltage value based on the difference between the bus voltage and the battery voltage; and
a vehicle controller, configured to receive the final requested charging voltage value from the battery management system, and control the bus voltage with the final requested charging voltage value.

### Sixth Embodiment

In a case that the multi-cluster battery parallel system is applied to a vehicle, the control method provided in the second embodiment is implemented by cooperation of a battery management system and a vehicle controller.

In this embodiment, a control system includes:
a battery management system, configured to calculate a current value allowable for charging for each battery cluster matched with a state of the battery cluster currently acquired, and determine a minimum value among the current values allowable for charging; calculate a difference between a bus voltage and a battery voltage based on a difference between the minimum value among the current values allowable for charging and a current value obtained by real-time sampling; and determine a final requested charging voltage value based on the difference between the bus voltage and the battery voltage; and
a vehicle controller, configured to receive the final requested charging voltage value from the battery management system, and control the bus voltage with the final requested charging voltage value.

### Seventh Embodiment

A computer readable storage medium storing a plurality of instructions thereon, where the instructions are applicable for being loaded by a processor of a terminal device to implement the steps of the method for controlling battery charging according to the first embodiment or the second embodiment.

### Eighth Embodiment

A terminal device, including: a processor; and a computer readable storage medium; where the processor is configured to implement instructions; the computer readable storage medium is configured to store a plurality of instructions, and the instructions are applicable for being loaded by the processor to implement the steps of the method for controlling battery charging according to the first embodiment or the second embodiment.

### Ninth Embodiment

A vehicle, including: the control system according to any one of the third embodiment to the sixth embodiment, the readable storage medium according to the seventh embodiment or the terminal device according to the eighth embodiment.

The above descriptions are only preferred embodiments of the present disclosure, which are not intended to limit the present disclosure. For those skilled in the art, the present disclosure may have various modifications and changes. Any modifications, equivalent replacements, improvements and the like made within the spirit and principles of the present disclosure shall be included within the protection scope of the present disclosure.

Although various specific embodiments of the present disclosure have been described in detail in connection with drawings, which are not intended to limit the scope of the present disclosure. Those skilled in the art will appreciate that modifications or changes can be made to the above embodiments based on the technical solutions of the present disclosure without creative efforts, which are still within the protection scope of the present disclosure.

## Claims

1. A method for controlling battery charging, comprising:
determining a current value allowable for charging matched with a state of a battery currently acquired;
calculating, based on a difference between the current value allowable for charging and a current value obtained by real-time sampling, a difference between a bus voltage and a battery voltage; and
controlling the bus voltage based on the difference between the bus voltage and the battery voltage, to realize charging control.

2. The method for controlling battery charging according to claim 1, wherein the state of the battery currently acquired comprises: a state of charge, a temperature, a voltage and an internal resistance value of the battery.

3. The method for controlling battery charging according to claim 1, wherein:
calculating, based on the difference between the current value allowable for charging and the current value obtained by real-time sampling, the difference between the bus voltage and the battery voltage, by using a PI control loop.

4. The method for controlling battery charging according to claim 1, wherein controlling the bus voltage based on the difference between the bus voltage and the battery voltage comprises:
calculating a sum of a difference between a current bus voltage and the battery voltage and a voltage at an initial moment of battery charging, as a final current charging voltage value; and
controlling the bus voltage to reach the final current charging voltage value, so as to control a charging current.

5. A method for controlling battery charging, comprising:
calculating a current value allowable for charging for each battery cluster matched with a state of the battery cluster currently acquired, and determining a minimum value among the current values allowable for charging;
calculating, based on a difference between the minimum value among the current values allowable for charging and a current value obtained by real-time sampling, a difference between a bus voltage and a battery voltage; and
controlling the bus voltage based on the difference between the bus voltage and the battery voltage, to realize charging control.

6. The method for controlling battery charging according to claim 5, wherein the battery clusters are connected in parallel.

7. The method for controlling battery charging according to claim 5, wherein the state of the battery currently acquired comprises: a state of charge, a temperature, a voltage and an internal resistance value of each battery.

8. The method for controlling battery charging according to claim 5, wherein:
calculating, based on the difference between the current value allowable for charging and the current value obtained by real-time sampling, the difference between the bus voltage and the battery voltage, by using a PI control loop.

9. The method for controlling battery charging according to claim 5, wherein:
calculating a sum of a difference between a current bus voltage and the battery voltage and a voltage at an initial moment of battery charging, as a final current charging voltage value; and
controlling the bus voltage to reach the final current charging voltage value, so as to control a charging current.

10. A system for controlling battery charging, comprising:
a parameter configuration module, configured to determine a current value allowable for charging matched with a state of a battery currently acquired;
a calculation module, configured to calculate a difference between a bus voltage and a battery voltage based on a difference between the current value allowable for charging and a current value obtained by real-time sampling; and
a charging control module, configured to control the bus voltage based on the difference between the bus voltage and the battery voltage, to realize charging control.

11. A system for controlling battery charging, comprising:
a parameter configuration module, configured to calculate a current value allowable for charging for each battery cluster matched with a state of the battery cluster currently acquired, and determine a minimum value among the current values allowable for charging;
a calculation module, configured to calculate a difference between a bus voltage and a battery voltage based on a difference between the minimum value among the current values allowable for charging and a current value obtained by real-time sampling; and
a charging control module, configured to control the bus voltage based on the difference between the bus voltage and the battery voltage, to realize charging control.

12. A control system, comprising:
a battery management system, configured to determine a current value allowable for charging matched with a state of a battery currently acquired; calculate a difference between a bus voltage and a battery voltage based on a difference between the current value allowable for charging and a current value obtained by real-time sampling; and determine a final requested charging voltage value based on the difference between the bus voltage and the battery voltage; and
a vehicle controller, configured to receive the final requested charging voltage value from the battery management system, and control the bus voltage with the final requested charging voltage value.

13. A control system, comprising:
a battery management system, configured to calculate a current value allowable for charging for each battery cluster matched with a state of the battery cluster currently acquired and determine a minimum value among the current values allowable for charging; calculate a difference between a bus voltage and a battery voltage based on a difference between the minimum value among the current values allowable for charging and a current value obtained by real-time sampling; and determine a final requested charging voltage value based on the difference between the bus voltage and the battery voltage; and
a vehicle controller, configured to receive the final requested charging voltage value from the battery management system, and control the bus voltage with the final requested charging voltage value.

14. A computer readable storage medium storing a plurality of instructions thereon, wherein the instructions are applicable for being loaded by a processor of a terminal device to implement steps of the method for controlling battery charging according to any one of claims 1-9.

15. A terminal device, comprising:
a processor; and
a computer readable storage medium;
wherein the processor is configured to implement instructions; the computer readable storage medium is configured to store a plurality of instructions, and the instructions are applicable for being loaded by the processor to implement steps of the method for controlling battery charging according to any one of claims 1-9.

16. A vehicle, comprising:
the control system according to any one of claims 10-13, the readable storage medium according to claim 14 or the terminal device according to claim 15.
